# EUROPEAN PATENT APPLICATION

(11) **EP 2 565 392 A2**
(43) Date of publication of application: **06.03.2013**
(21) Application number: 12182560.8
(22) Date of filing: 31.08.2012
(51) Int. Cl.: F01D 25/12, F02C 3/36

(54) **Gas turbine engine air cycle system**

(30) Priority: 01.09.2011 US 201113223578
(71) Applicant: United Technologies Corporation, Hartford, CT 06101 (US)
(72) Inventor: Finney, Adam, Rockford, IL Illinois 61114 (US); Andres, Michael, Roscoe, IL Illinois 61073 (US)
(74) Representative: Leckey, David Herbert

(57) **Abstract**

An air cycle system (100) for a gas turbine engine includes a compressor (62), a turbine (64) and a heat exchanger (66) fluidly connected between the compressor (62) and the turbine (64). A fluid source (92) communicates a fluid through the heat exchanger (66). The heat exchanger (66) exchanges heat between the fluid and an airflow communicated through the heat exchanger (66) from the compressor (62) to provide a conditioned airflow.

## Description

### BACKGROUND

This disclosure relates generally to a gas turbine engine, and more particularly to an air cycle system for providing conditioned airflow to various locations of the gas turbine engine.

Gas turbine engines, such as turbofan gas turbine engines, generally include a fan section, a compressor section, a combustor section and a turbine section. During operation, airflow is pressurized in the compressor section and is mixed with fuel and burned in the combustor section. The hot combustion gases that are generated in the combustor section are communicated through the turbine section. The turbine section extracts energy from the hot combustion gases to power the compressor section, the fan section and other gas turbine engine loads.

Various portions of the gas turbine engine operate at relatively high temperatures and relatively high pressures and therefore must be cooled because of the thermal limitations of the components of such portions. For example, the high pressure turbine section of a gas turbine engine can be cooled by bleeding airflow from a lower temperature portion of the gas turbine engine, such as the compressor section.

### SUMMARY

An air cycle system for a gas turbine engine includes a compressor, a turbine and a heat exchanger fluidly connected between the compressor and the turbine. A fluid source communicates a fluid through the heat exchanger. The heat exchanger exchanges heat between the fluid and an airflow communicated through the heat exchanger from the compressor to provide a conditioned airflow.

In another exemplary embodiment, the gas turbine engine includes a compressor section, a combustor section and a turbine section. A bleed port is disposed at a portion of the gas turbine engine. An air cycle system selectively receives a bleed airflow from the bleed port. The air cycle system includes a compressor, a turbine and a heat exchanger fluidly connected between the compressor and the turbine. A first portion of a conditioned airflow is communicated from the heat exchanger to the turbine and a second portion of the conditioned airflow is communicated from the heat exchanger to a high pressure location of at least one of the compressor section and the turbine section.

In yet another exemplary embodiment, a method for providing conditioned airflow to various locations of a gas turbine engine includes communicating a bleed airflow from the gas turbine engine to an air cycle system. The bleed airflow is compressed to provide a conditioned airflow. The conditioned airflow is cooled. A first portion of the conditioned airflow is communicated to a turbine of the air cycle system and a second portion of the conditioned airflow is communicated to a high pressure location of the gas turbine engine.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 schematically illustrates a gas turbine engine.
Figure 2 illustrates an example air cycle system for a gas turbine engine.
Figure 3 illustrates another example air cycle system.
Figure 4 illustrates an additional air cycle system.
Figure 5 illustrates yet another example air cycle system.
Figure 6 illustrates an additional example air cycle system.

### DETAILED DESCRIPTION

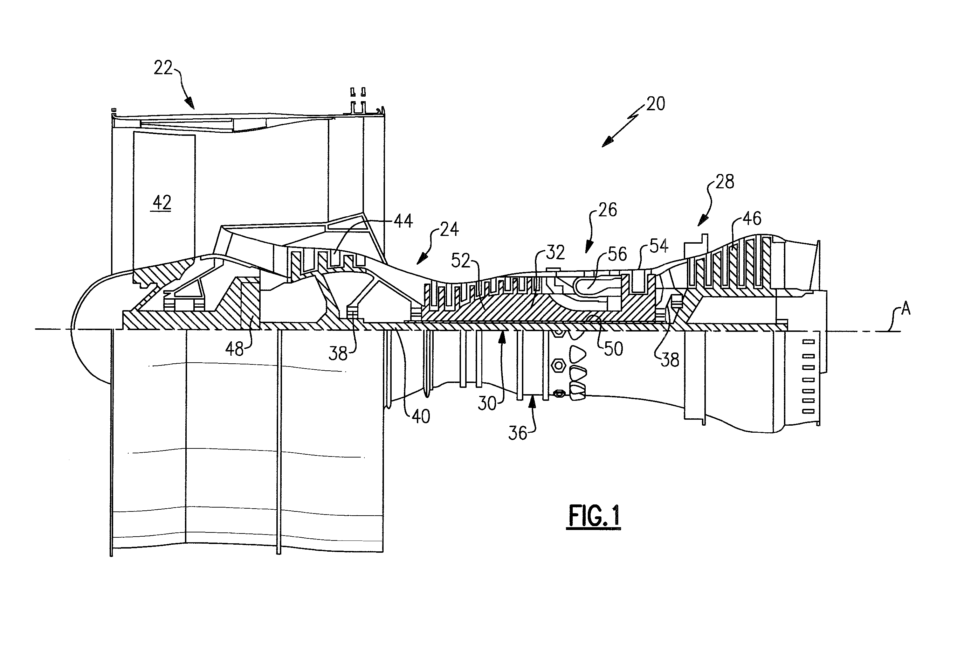

Figure 1 schematically illustrates a gas turbine engine 20. The example gas turbine engine 20 is a two spool turbofan engine that generally incorporates a fan section 22, a compressor section 24, a combustor section 26 and a turbine section 28. Alternative engines might include fewer or additional sections such as an augmenter section (not shown) among other systems or features. Generally, the fan section 22 drives air along a bypass flow path, while the compressor section 24 drives air along a core flow path for compression and communication into the combustor section 26. The hot combustion gases generated in the combustor section 26 are expanded through the turbine section 28. This view is highly schematic and is included to provide a basic understanding of the gas turbine engine 20 and not to limit the disclosure. This disclosure extends to all types of gas turbine engines and to all types of applications.

The gas turbine engine 20 generally includes at least a low speed spool 30 and a high speed spool 32 mounted for rotation about an engine centerline axis A relative to an engine static structure 36 via several bearing systems 38. The low speed spool 30 generally includes an inner shaft 40 that interconnects a fan 42, a low pressure compressor 44, and a low pressure turbine 46. The inner shaft 40 can connect to the fan 42 through a geared architecture 48 to drive the fan 42 at a lower speed than the low speed spool 30. The high speed spool 32 includes an outer shaft 50 that interconnects a high pressure compressor 52 and a high pressure turbine 54.

A combustor 56 is arranged between the high pressure compressor 52 and the high pressure turbine 54. The inner shaft 40 and the outer shaft 50 are concentric and rotate about the engine centerline axis A. A core airflow is compressed by the low pressure compressor 44 and the high pressure compressor 52, is mixed with fuel and burned within the combustor 56, and is then expanded over the high pressure turbine 54 and the low pressure turbine 46. The turbines 54, 46 rotationally drive the low speed spool 30 and the high speed spool 32 in response to the expansion.

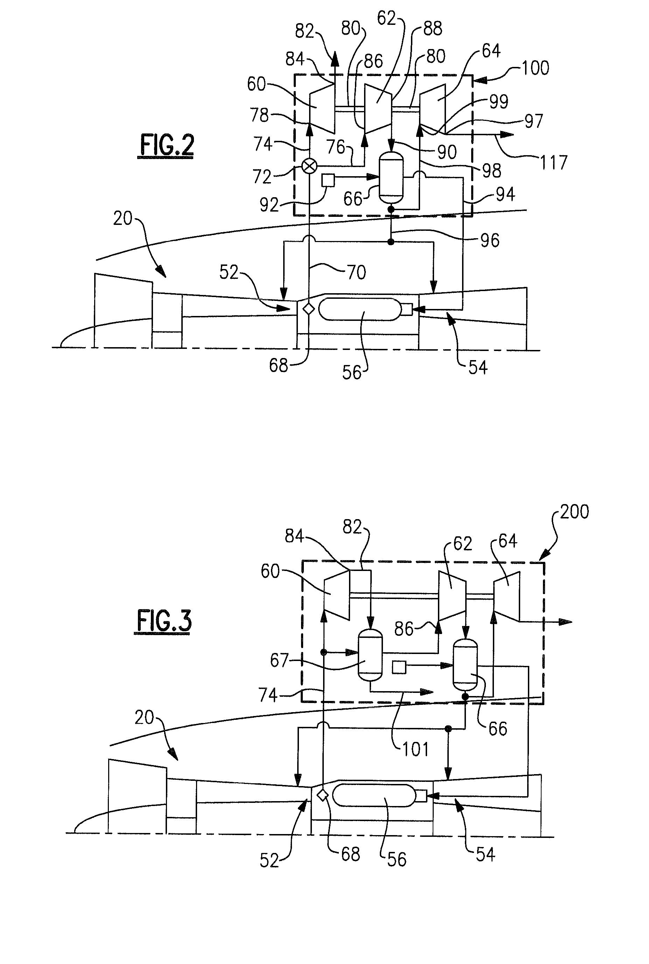

Figure 2 illustrates an air cycle system 100 for a gas turbine engine, such as the gas turbine engine 20 illustrated in Figure 1. The air cycle system 100 provides conditioned airflow to various locations of the gas turbine engine 20. For example, the air cycle system 100 can deliver conditioned airflow to cool high temperature and high pressure locations of the gas turbine engine. However, in this disclosure, the term "conditioned airflow" is defined to include heated, cooled and pressurized airflows.

The air cycle system 100 includes a first turbine 60, a compressor 62, a second turbine 64 and a heat exchanger 66. Of course, this view is highly schematic and is not necessarily to the scale it would be in practice. It should also be understood that the components of the air cycle system 100, including the first turbine 60, the second turbine 64 and the compressor 62, are separate and distinct components from the compressor section 24 and turbine section 28 described above and depicted in Figure 1. The air cycle system 100 is mounted to the gas turbine engine 20. The mounting location of the air cycle system 100 is application specific. Non-limiting examples of mounting locations of the air cycle system 100 include the core engine and the engine pylon among other mounting locales.

The gas turbine engine 20 includes a bleed port 68 that communicates a bleed airflow from a location of the gas turbine engine 20 to the air cycle system 100. The bleed port 68 can be disposed at a number of locations of the gas turbine engine for communicating the bleed airflow. For example, the bleed port 68 can be disposed at the fan section 22, the low pressure compressor 44, the high pressure compressor 52 or other locales. In this particular example, the bleed port 68 communicates a bleed airflow from the high pressure compressor 52 to the air cycle system 100.

The bleed airflow from the bleed port 68 is communicated through a bleed passage 70, such as ducting, to both the first turbine 60 and the compressor 62. The air cycle system 100 can optionally include a valve 72 that controls the delivery of the bleed airflow to the first turbine 60 and the compressor 62. Other valves, sensors and controls, although not shown, could also be incorporated into the air cycle system 100.

A first portion of the bleed airflow is delivered to the first turbine 60 through a passage 74 and a second portion of the bleed airflow is delivered to the compressor 62 through a passage 76. The bleed airflow is delivered to an inlet 78 of the first turbine 60 and is expanded by the first turbine 60 to reduce a temperature and a pressure of the bleed airflow. The bleed airflow delivered to the first turbine 60 powers the first turbine 60 to drive a shaft 80 for powering the compressor 62, and additional power is provided by the second turbine 64. An exhaust 82 exits an outlet 84 of the first turbine 60 and can be used to address a gas turbine engine cooling need. For example, the exhaust 82 can be delivered to an engine casing of the gas turbine engine 20 to cool the engine casing.

The bleed airflow that is delivered directly to the compressor 62 along passage 76 is delivered to an inlet 86 of the compressor 62 and is compressed to increase a temperature and a pressure of the bleed airflow. A compressed airflow from the compressor 62 is communicated through an outlet 88 of the compressor 62 and is delivered to the heat exchanger 66 through a passage 90. The heat exchanger 66 is fluidly connected between the compressor 62 and the second turbine 64. In other words, the heat exchanger 66 is positioned downstream from the compressor 62. Such positioning can increase the cooling capacity of the air cycle system 100 and can reduce the relative size of the heat exchanger 66.

The heat exchanger 66 decreases the temperature of the compressed airflow to render a conditioned airflow. The heat exchanger 66 receives a fluid, such as airflow or fuel, from a fluid source 92 that is circulated through the heat exchanger 66 over a fluid path 94. The fluid from the fluid source 92 exchanges heat with the compressed airflow communicated through the heat exchanger 66 to cool the compressed airflow. In one example, the fluid from the fluid source 92 is fuel that is ultimately communicated to the combustor 56 of the gas turbine engine 20. However, other fluids, including but not limited to RAM air and fan air, could be used as the heat exchanger medium.

A first portion of the conditioned airflow from the heat exchanger 66 is communicated through a passage 96 to one or more high pressure locations of the gas turbine engine 20. For example, the first portion of the conditioned airflow can be delivered to the high pressure compressor 52 and the high pressure turbine 54 to cool these sections including the stators and vanes of these sections. The first portion of the conditioned airflow can also be used for combustor 56 cooling, customer bleed cooling (i.e., pre-cooler) and air-oil cooler cooling.

A second portion of the conditioned airflow from the heat exchanger 66 can be delivered to the second turbine 64 via a passage 98. The second portion of the conditioned airflow is communicated through an inlet 99 of the second turbine 64 and is expanded by the turbine to decrease the temperature and pressure of the conditioned airflow. An exhaust 117 from the second turbine 64 can be communicated through an outlet 97 of the second turbine 64 to cool a relatively low pressure section of the gas turbine engine 20. For example, the exhaust 117 from the second turbine 64 can provide buffer cooling air to the gas turbine engine 20. Buffer cooling air is used as a relatively cool air source to pressurize the bearing cavities of the gas turbine engine 20 in an effort to insulate the oil system from the gas turbine heat. As can be appreciated, the air cycle system 100 can provide conditioned airflow for cooling numerous locations of a gas turbine engine, including but not limited to, low pressure sections and high pressure sections of the gas turbine engine 20.

Figure 3 illustrates another exemplary air cycle system 200. In this disclosure, like reference numerals represent like features, and reference numerals in multiples of 100 represent slightly modified arrangements. For example, the air cycle system 200 is substantially similar to the air cycle system 100 except as noted below.

The air cycle system 200 includes a second heat exchanger 67 in addition to the first turbine 60, the compressor 62, the second turbine 64 and the heat exchanger 66. The second heat exchanger 67 is disposed in the passage 74 such that it is between the bleed port 68 and the compressor 62. The second heat exchanger 67 acts as a pre-cooler upstream from the inlet 86 of the compressor 62 for cooling the portion of the bleed airflow that is delivered to the compressor 62 prior to delivery to the compressor 62.

The exhaust 82 from the first turbine 60 is communicated through an outlet 84 of the first turbine 60 and is delivered to the second heat exchanger 67 for exchanging heat with the bleed airflow that is also communicated through the second heat exchanger 67. A conditioned airflow 101 is communicated from the second heat exchanger 67 for delivery to a relatively low pressure cooling requirement of the gas turbine engine 20. For example, the conditioned airflow 101 can be used to cool the engine casing. In addition, like the air cycle system 100, the air cycle system 200 can also deliver conditioned airflows to one or more high pressure locations and low pressure locations of the gas turbine engine 20.

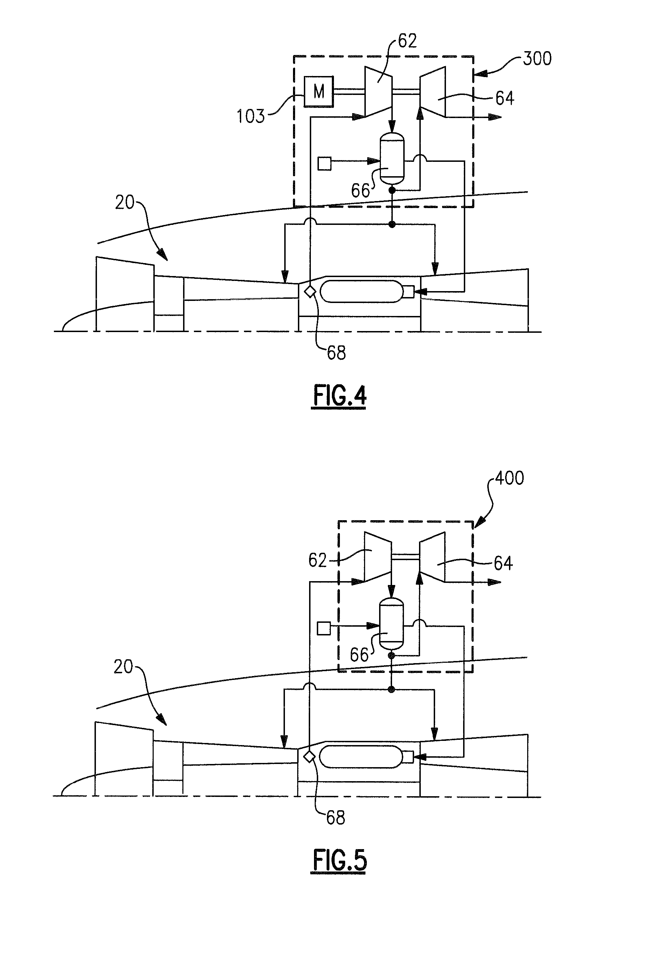

Figure 4 illustrates yet another air cycle system 300 that is substantially similar to the air cycle system 100. However, in this example, the first turbine 60 has been eliminated. Instead, the air cycle system 300 is powered by a motor 103. The motor 103 enables the air cycle system 300 to communicate a higher pressure conditioned airflow to various locations of the gas turbine engine 20 without the need for large quantities of bleed airflow. Alternatively, the motor 103 could be a generator that also provides engine electricity in the event the turbine 64 provides more power than is required by the compressor 62.

As depicted in Figure 5, an air cycle system 400 can eliminate both the first turbine 60 and the motor 103. Such a system may be desired in applications where relatively high pressure conditioned airflows are not necessary to cool the gas turbine engine 20.

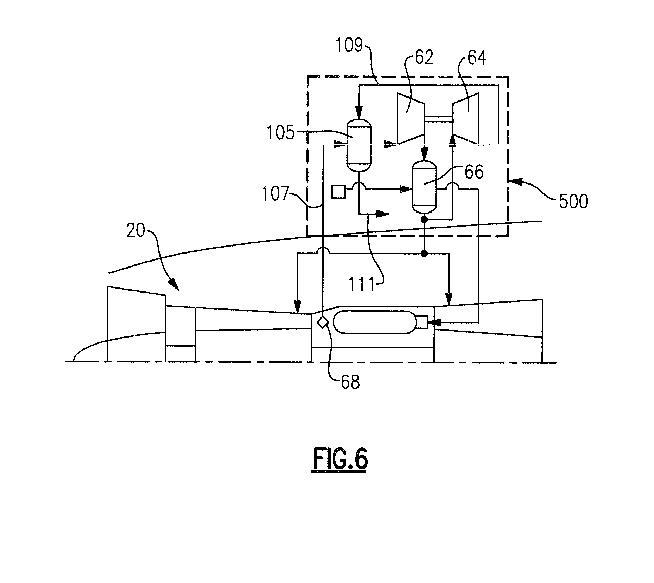

Figure 6 illustrates yet another air cycle system 500 that is substantially similar to the air cycle system 100 except for several modifications. The air cycle system 500 does not include either a first turbine 60 or a motor 103. Instead, the air cycle system 500 includes a second heat exchanger 105 that is positioned upstream from the compressor 62. The second heat exchanger 105 receives a bleed airflow from the bleed port 68 along a passage 107. The second heat exchanger 105 cools the bleed airflow from the bleed port 68 by exchanging heat with an airflow 109 that is communicated to the second heat exchanger 105 from the second turbine 64. A conditioned airflow 111 from the second heat exchanger 105 can be used to cool a portion of the gas turbine engine. For example, the conditioned airflow 111 can be used for buffer cooling. In addition, like the air cycle system 100, the air cycle system 500 can also deliver conditioned airflows to one or more high pressure locations and low pressure locations of the gas turbine engine 20

The example air cycle systems 100, 200, 300, 400 and 500 described herein provide increased gas turbine engine performance by permitting the materials in the high pressure sections of the gas turbine engine 20 to operate at current temperature limits but also at higher pressure and gas temperature than are currently allowed. The air cycle systems can decrease the costs of engine operation by enabling relatively lower metal temperatures in the high pressure sections of the gas turbine engine, which in turn could allow less expensive (more common) metals to be used.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. An air cycle system (100;200;300;400;500) for a gas turbine engine, comprising:
a compressor (62);
a turbine (64);
a heat exchanger (66) fluidly connected between said compressor (62) and said turbine (64); and
a fluid source (92) that communicates a fluid through said heat exchanger (66), wherein said heat exchanger (66) exchanges heat between said fluid and an airflow communicated through said heat exchanger (66) from said compressor (62) to provide a conditioned airflow.

2. The system as recited in claim 1, wherein said fluid is a fuel.

3. The system as recited in claim 1, wherein said fluid is air.

4. A gas turbine engine, comprising:
a compressor section (24), a combustor section (26) and a turbine section (28);
a bleed port (68) disposed at a portion of the gas turbine engine (20); and
an air cycle system (100;200;300;400;500) that selectively receives a bleed airflow from said bleed port (68), wherein said air cycle system includes a compressor (62), a turbine (64) and a heat exchanger (66) fluidly connected between said compressor (62) and said turbine (64), and wherein a first portion of a conditioned airflow is communicated from said heat exchanger (66) to said turbine (64) and a second portion of said conditioned airflow is communicated from said heat exchanger (66) to a high pressure location of at least one of said compressor section (24), said combustor section (26) and said turbine section (28).

5. The gas turbine engine as recited in claim 4, comprising a second turbine (60), wherein an exhaust (88) of said second turbine (60) is communicated to a low pressure cooling requirement of the gas turbine engine (20).

6. The gas turbine engine as recited in claim 4 or 5, wherein an exhaust (117) of said turbine (64) is communicated to a low pressure cooling requirement of the gas turbine engine (20).

7. The system or gas turbine engine as recited in any preceding claim, wherein said heat exchanger (66) is positioned downstream from said compressor (62).

8. The system or gas turbine engine as recited in any preceding claim, comprising a second turbine (60) that powers said compressor (62).

9. The system or gas turbine engine as recited in any of claims 1 to 7, comprising a motor (103) that powers said compressor (62).

10. The system or gas turbine engine as recited in any preceding claim, comprising a second heat exchanger (67;105) positioned upstream from said compressor (62).

11. The system or gas turbine engine as recited in claim 10, wherein said second heat exchanger (67;105) receives a or said bleed airflow.

12. The system as recited in claim 10 or 11, wherein said second heat exchanger (105) receives an airflow (109) from said turbine (64).

13. A method of communicating conditioned airflow to various locations of a gas turbine engine (20), comprising the steps of:
communicating a bleed airflow from the gas turbine engine (20) to an air cycle system (100;200;300;400;500);
compressing the bleed airflow to provide a compressed airflow;
cooling the compressed airflow to provide a conditioned airflow; and
communicating a first portion of the conditioned airflow to a turbine (64) of the air cycle system and communicating a second portion of the conditioned airflow to a high pressure location of the gas turbine engine (20).

14. The method as recited in claim 13, comprising the step of:
communicating an exhaust (117) of the turbine (64) to address a low pressure cooling requirement of the gas turbine engine (20).

15. The method as recited in claim 13, comprising the step of:
communicating an exhaust (109) of the turbine (64) through a heat exchanger (105); and
cooling the bleed airflow with the heat exchanger (105) prior to the step of compressing the bleed airflow.
